Europäisches Patentamt

European Patent Office

Office européen des brevets

(11) Veröffentlichungsnummer : **0 363 600 B1**

## (12) EUROPÄISCHE PATENTSCHRIFT

(45) Veröffentlichungstag der Patentschrift :
**29.07.92 Patentblatt 92/31**

(21) Anmeldenummer : **89114778.7**

(22) Anmeldetag : **10.08.89**

(51) Int. Cl.$^5$ : **F01L 1/34,** F16D 3/10

(54) Vorrichtung zur Winkelverstellung einer Nockenwelle.

(30) Priorität : **13.10.88 DE 3834857**

(43) Veröffentlichungstag der Anmeldung :
**18.04.90 Patentblatt 90/16**

(45) Bekanntmachung des Hinweises auf die
Patenterteilung :
**29.07.92 Patentblatt 92/31**

(84) Benannte Vertragsstaaten :
**DE FR GB IT SE**

(56) Entgegenhaltungen :
**EP-A- 0 274 019**
**US-A- 4 762 097**

(56) Entgegenhaltungen :
**PATENT ABSTRACTS OF JAPAN vol. 10, no.
109 (M-472) 23 April 1986, & JP-A-60 240808
(Nissan) 29-11-1985**
"Les mécanismes dans la technique moderne", I.ARTOBOLEVSKI, Tome 3, Mécanismes
à engrenage, Editions MIR, Moscou, 1976,Seiten 585 -591

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Mirlach, Robert
Zugspitzstrasse 35 a
W-8035 Gauting (DE)**
Erfinder : **Müller, Fritz
Leopoldstrasse 202/8907
W-8000 München 40 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Winkelverstellung einer Brennkraftmaschinen-Nockenwelle nach dem Oberbegriff des Anspruchs 1 und geht aus von der US 4 762 097. Die Erfindung ist dabei nicht auf eine Nockenwelle, die die Ladungswechselventile der Brennkrafftmaschine steuert, beschränkt; vielmehr ist die Anwendung einer derartigen Verstellvorrichtung beispielsweise auch an einer Einspritzpumpe einer Diesel-Brennkraftmaschine denkbar.

Bei der aus der oben genannten Schrift bekannten Nockenwellen-Verstellvorrichtung erfolgt die Verstellung derart, daß die gegenüber ihrem Antriebsrad verdrehbare Welle hydraulisch abgebremst wird. Vorgesehen ist hierzu eine einem Retarder ähnliche hydraulische Kupplung, die einen mehr oder minder großen Schlupf gegenüber einem feststehenden Bremselement erlaubt. Mit dieser bekannten Anordnung ist jedoch lediglich eine dem Antriebsrad nacheilende Verstellung der Welle möglich. In vielen Betriebspunkten der Brennkraftmaschine muß daher bei der bekannten Anordnung in relativ verlustreicher Weise die Welle gegenüber dem Antriebsrad gebremst werden.

Aufgabe der Erfindung ist es daher, Maßnahmen aufzuzeigen, mit Hilfe derer die Verluste an einer Nockenwellen-Verstellvorrichtung nach dem Oberbegriff des Anspruchs 1 verringert werden können.

Zur Lösung dieser Aufgabe ist vorgesehen, daß die Kupplung über ein Übersetzungsgetriebe eine Verbindung zwischen der Welle sowie einer weiteren rotierenden Maschinenwelle herstellt. Vorteilhafte Aus- und Weiterbildungen der Erfindung beschreiben die Unteransprüche.

Erfindungsgemäß wird die gegenüber ihrem Antriebsrad zu verstellende Welle über die schaltbare Kupplung nicht mit einer feststehenden Bremse gekoppelt, sondern über ein Übersetzungsgetriebe mit einer weiteren rotierenden Maschinenwelle verbunden. Das Übersetzungsgetriebe kann dabei alternativ eine Übersetzung in eine niedrigere oder höhere Drehgeschwindigkeit herstellen. Liegt eine höhere Drehgeschwindigkeit vor, so ist es sogar möglich, die Welle gegenüber ihrem Antriebsrad voreilend zu verstellen, liegt hingegen eine niedrigere Drehgeschwindigkeit vor, so werden zumindest die Bremsverluste der Welle gegenüber dem Antriebsrad reduziert, da nunmehr die Schlupf-Kupplung lediglich ein geringeres Drehzahlniveau überbrücken muß.

Weiter reduziert werden können die Verluste, wenn gemäß Anspruch 2 ein die Welle mit dem Antriebsrad starr verbindendes Rastelement vorgesehen ist. Dieses kann gelöst werden, um dann nach Zuschalten der Kupplung mittels des Übersetzungsgetriebes die Welle voreilend bzw. nacheilend zu verstellen, wonach das Rastelement die Welle wieder starr mit dem Antriebsrad verbinden kann. Selbstverständlich ist es jedoch auch möglich, die Nockenwelle gegenüber dem Wellen-Antriebsrad unter Schlupfeinfluß kontinuierlich in verdrehter Position zu halten. Diese Anordnung ermöglicht es darüber hinaus, bei Auswahl einer entsprechend ansteuerbaren Schlupf-Kupplung durch Einstellen der Schlupf-Intensität den Verdrehwinkel der Nockenwelle gegenüber dem Antriebsrad gesteuert einzustellen. Dieser Effekt läßt sich selbstverständlich auch mit einem Rastelement erzielen, welches in jeder Verdrehwinkellage in Eingriff gebracht werden kann.

Anspruch 3 nennt vorteilhafte, da mechanisch zuverlässige Ausbildungen der schaltbaren Kupplung. Diese kann analog einem hydraulischen Drehmomentwandler aufgebaut sein, darüber hinaus ist jedoch auch möglich, diese ähnlich einer bekannten Viskositäts-Kupplung auszubilden. Eine vorteilhafte Funktionsvereinigung ist desweiteren mit den Merkmalen des Anspruchs 5 erzielbar. Durch Verschieben eines Wandabschnittes einer Flügelzellenpumpe bezüglich eines Flügelzellenrades kann auf die mit dem Flügelzellenrad drehfest verbundene Nockenwelle ein die Welle vorverstellendes bzw. rückverstellendes Drehmoment aufgebracht werden.

Bei der weiteren rotierenden Maschinenwelle, mit der die zu verstellende Nockenwelle über die Kupplung sowie das Übersetzungsgetriebe verbunden wird, kann es sich beispielsweise um die Kurbelwelle oder um die zweite Nockenwelle einer Zwei-Nockenwellen-Brennkraftmaschine handeln. Als Übersetzungsgetriebe kann ein Zahnradgetriebe oder ein beliebiges Zugmittelgetriebe zum Einsatz kommen. Soll mit der erfindungsgemäßen Vorrichtung eine nacheilende Verstellung der Nockenwelle erfolgen, so kann diese dann vorzugsweise separate Maschinenwelle mit einem Energieverbraucher gekoppelt sein. Neben einem Retarder, einer elektrischen Wirbelstrombremse oder beispielsweise der Pumpenwelle der Brennkraftmaschinen-Wasserpumpe kann dieser Energieverbraucher vorteilhafterweise auch durch den ohnehin vorhandenen elektrischen Generator gebildet werden. Möglich ist es jedoch auch, daß die weitere Maschinenwelle mit einem Umlenkrolle eines endlosen Zugmittelgetriebes verbunden ist. Dann kann die bei einer nacheilenden Verstellung der Nockenwelle aufgewandte Bremsarbeit teilweise der Umlenkrolle zugeführt werden, wodurch Zugkräfte im Leertrum der Zugmittels herabgesetzt werden.

Anspruch 6 schließlich gibt eine einfache funktionssichere Anordnung für den Mitnehmer der Welle sowie die Aussparung im Antriebsrad an. Dabei kann ein als Schrauben-Druckfeder - vorzugsweise mit degressiver Kennlinie - ausgebildetes Kraftspeicherelement vorgesehen sein, um beispielsweise im Fall einer nacheilenden Verstellung die Nockenwelle bezüglich des Antriebsrades in einer definierten Ausgangsposition zu halten. Im Falle einer Nachverstellung muß dann lediglich die Spannkraft dieses Kraftspeicherelementes überwunden werden. Bei einer Vorverstellung der Nockenwelle gegenüber einer Ausgangsposition, in welcher diese beispielsweise an einem Anschlag des Antriebsrades anliegt, gilt es hingegen, das die Nockenwelle gegen Drehrichtung am Anschlag haltende Widerstandsmoment - hervorgerufen durch Reibmomente und durch die von den Nocken verursachte Ventilöffnungsbewegung - zu überwinden.

Im folgenden wird die Erfindung anhand einiger, lediglich in Prinzipskizzen dargestellter Ausführungsbeispiele näher beschrieben. Es zeigt:

Fig. 1 die Aufsicht auf einen Nockenwellenantrieb einer Zwei-Nockenwellen-Brennkraftmaschine mit Nokkenwellen-Verdrehvorrichtung,

Fig. 2 wesentliche Details der Ansicht X aus Fig. 1,

Fig. 3 eine Weiterbildung für eine nacheilende Verstellung der Nockenwelle,

Fig. 4 wesentliche Details der Ansicht Y aus Fig. 3,

Fig. 5 eine Anordnung sowohl zur voreilenden als auch nacheilenden Verstellung der Nockenwelle, sowie

Fig. 6 eine Prinzipskizze einer sowohl eine voreilende als auch eine nacheilende Verstellung ermöglichenden Flügelzellenpumpe.

Eine lediglich grobskizzierte Brennkraftmaschine 1 ist mit zwei Nockenwellen 2, 3 versehen, welche von einem in seiner Gesamtheit mit 4 bezeichneten Kettentrieb angetrieben werden. Hierzu weisen die Nockenwellen 2, 3 Nockenwellen-Antriebsräder 12, 13 auf, über welche eine weiters über ein Kurbelwellenrad 6 sowie eine Umlenkrolle 8 geführte Kette 10 läuft.

Setzt der Kettentrieb 4 gemäß Pfeilrichtung 9 die Antriebsräder 12, 13 in Drehbewegung, so wird der Absatz 16 der Nockenwelle 3 aufgrund des der Nockenwellen-Drehbewegung entgegenwirkenden Widerstandes - hervorgerufen durch Reibmomente sowie durch die auf die Nocken der Nockenwelle einwirkenden, durch die Ventilfedern hervorgerufenen Ventilöffnungskräfte - an der (linken) Schulter 15a der Aussparung 15 zum Anliegen kommen. Unterstützend kann dabei zwischen dem Absatz 16 sowie der (rechten) Schulter 15b der Aussparung 15 ein Federelement 25 vorgesehen sein. In dieser Position wird die Nockenwelle 3 somit synchron zur Nockenwelle 2 sowie dem Kurbelwellenrad 6 in einer ersten Phasenlage in Drehbewegung versetzt. Würde hingegen der Absatz 16 der Nockenwelle 3 an der Schulter 15b anliegen und in dieser Position bzgl. des Nockenwellen-Antriebsrades 13 gehalten werden, so befände sich die Nockenwelle 3 in einer voreilenden Position, wäre also um den Phasenwinkel $\gamma = (\alpha - \text{ß})$ vorverstellt.

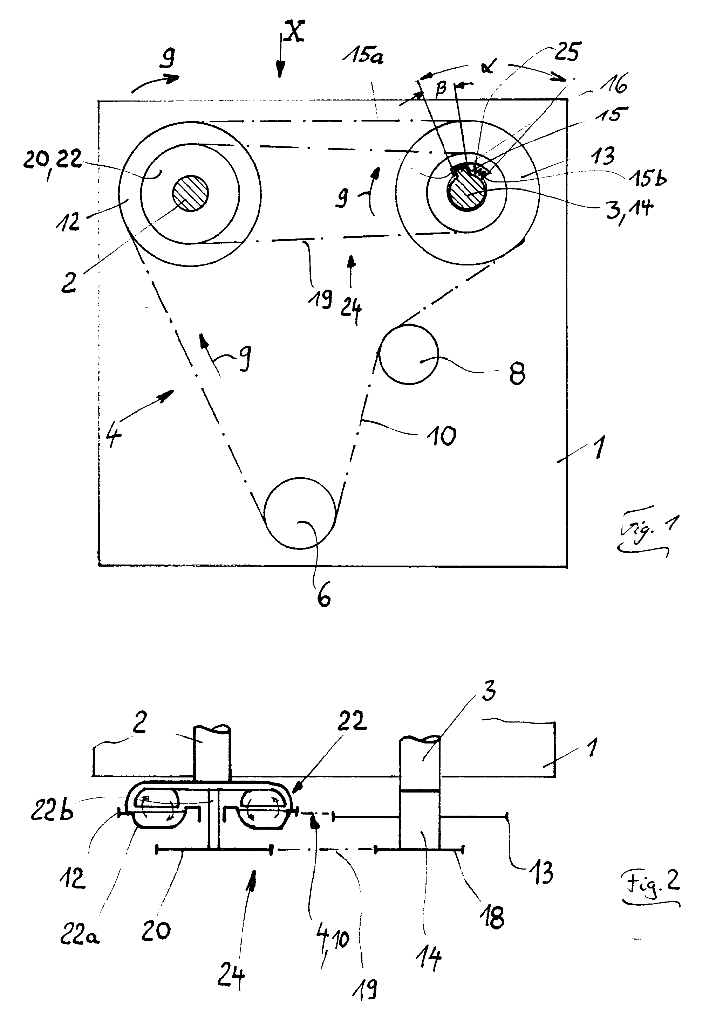

Eine derartige Vorverstellung läßt sich beispielsweise mit Hilfe der - insbesondere in Fig. 2 klar ersichtlichen - erfindungsgemäßen Anordnung erzielen. Hierzu trägt der Zapfen 14 der Nockenwelle 3 ein als Riemenscheibe ausgebildetes Getriebeelement 18, welches über ein Zugmittel 19 mit einer an der Nockenwelle 2 angeordneten Riemenscheibe 20 verbunden ist. Zwischen der Riemenscheibe 20 sowie der Nockenwelle 2 ist desweiteren eine in ihrer Gesamtheit mit 22 bezeichnete Flüssigkeits-Reibungskupplung vorgesehen. Das Gehäuse 22a der Flüssigkeits-Reibungskupplung ist drehfest mit der Nockenwelle 2 verbunden und trägt zugleich deren Antriebsrad 12. Die Abtriebswelle 22b der Flüssigkeits-Reibungskupplung 22 hingegen trägt die Riemenscheibe 20.

Da das von der Riemenscheibe 20, dem Zugmittel 19 sowie dem Getriebeelement 18 gebildete Übersetzungsgetriebe 24 das Getriebeelement 18 in eine Drehgeschwindigkeit versetzt, welche größer ist als diejenige der Riemenscheibe 20, wird bei geschlossener Flüssigkeits-Reibungskupplung 22 die mit dem Getriebeelement 18 verbundene Nockenwelle 3 von der in Fig. 1 gezeigten Position gegenüber dem Antriebsrad 13 in Pfeilrichtung 9 weiterbewegt, bis der Absatz 16 an der rechten Schulter 15b der Aussparung 15 anliegt. Da die Flüssigkeitsreibungskupplung 22 zwischen der Drehbewegung der Antriebswelle (Nockenwelle 2 bzw. Gehäuse 22a) sowie der Abtriebswelle 22b Schlupf ermöglicht, wird die Nockenwelle 3 in der mit ihrem Absatz 16 an der rechten Schulter 15b des Antriebsrades 13 anliegenden Position gehalten. Bei Lösen der Flüssigkeitsreibungskupplung 22 hingegen bewegt sich die Nockenwelle 3 bzgl. des Antriebsrades 13 aufgrund des ihrer Drehbewegung entgegenwirkenden Widerstandsmomentes sowie evtl. unter Einfluß des Federelementes 25 wieder in die in Fig. 1 gezeigte Position.

Selbstverständlich ist es durch entsprechende Ansteuerung der Flüssigkeits-Reibungskupplung 22 (getaktet bzw. über eine Schlupfsteuerung) auch möglich, die Nockenwelle 3 bzgl. des Antriebsrades 13 in jeder durch die beiden Anschläge (Schulter 15a bzw. Schulter 15b) begrenzten Zwischenposition zu halten. Da der Ansteuerungsmechanismus einer derartigen Flüssigkeitsreibungskupplung nicht Wesen der Erfindung ist, erfolgen an dieser Stelle hierzu keine weiteren Erläuterungen. Selbstverständlich ist bei elektronischer Ansteuerung beispielsweise ein Induktivgeber erforderlich, um in einem Regelkreis die genaue Position der Nockenwelle 3 bzgl. des Antriebsrades 13 ermitteln sowie einregeln zu können.

Nicht gezeigt ist desweiteren die bereits oben beschriebene Ausführungsvariante, bei welcher ein die Nockenwelle mit dem Antriebsrad starr verbindendes Rastelement vorgesehen ist. Auch hierbei wird die Flüssigkeits-Reibungskupplung, anstelle derer ebensogut eine mechanische Reibungskupplung oder eine Viskositätskupplung vorgesehen sein kann, nur solange geschlossen, bis sich die Nockenwelle 3 bzgl. ihres Antriebsrades 13 in der gewünschten Position befindet. Im Anschluß daran wird die Nockenwelle mit dem Antriebsrad durch Eingriff des nichtgezeigten Rastelementes starr verbunden und die Kupplung gelöst. Eine Rückbewegung in die in Fig. 1 gezeigte Position erfolgt auch hierbei selbsttätig durch Lösen des Rastelementes bei geöffneter Kupplung aufgrund des der Nockenwellen-Drehbewegung entgegenwirkenden Widerstandsmomentes.

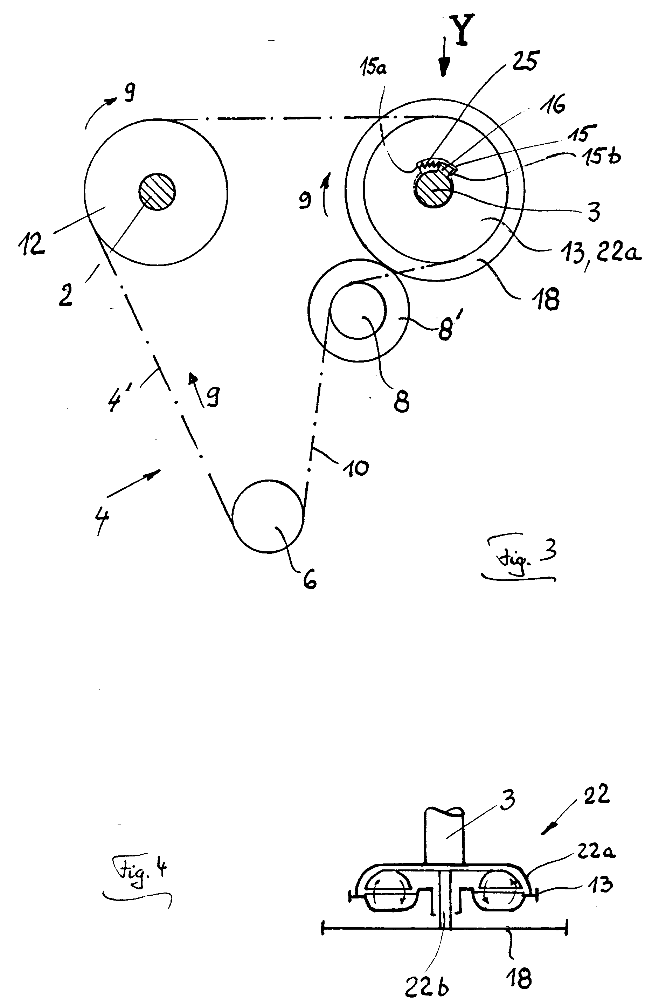

Ein weiteres Ausführungsprinzip ist in den Fig. 3 und 4 dargestellt, wobei die bereits erläuterten Bauelemente mit gleichen Ziffern bezeichnet sind. Hier ist zwischen dem Absatz 16 der Nockenwelle 3 sowie der linken Schulter 15a der Aussparung 15 des Antriebsrades 13 ein Kraftspeicherelement 25 in Form beispielsweise einer Druck-Schraubenfeder eingespannt. Ohne Einwirkung des über eine schaltbare Kupplung mit dem Getriebelement verbindbaren, eine von der des Antriebsrades verschiedenartige Drehgeschwindigkeit aufweisenden Elementes wird somit die Nockenwelle 3 bzgl. des Antriebsrades 13 unter Einfluß des Kraftspeicherelementes 25 stets in der gezeigten Position gehalten.

Wie auch Fig. 4 zeigt, trägt das Gehäuse 22a der Flüssigkeits-Reibungskupplung 22 das Nockenwellen-Antriebsrad 13 und ist auf der Nockenwelle 3 innerhalb des von der Aussparung 15 sowie dem Absatz 16 begrenzten Winkelbereiches drehbar gelagert. Die Abtriebswelle 22b der Flüssigkeits-Reibungskupplung 22 trägt in diesem Ausführungsbeispiel das Getriebelement 18, welches mit der Umlenkrolle 8 in Antriebsverbindung steht. Hierzu ist das Getriebeelement 18 als Zahnrad, welches mit einem an der Umlenkrolle 8 angeordneten Gegenzahnrad 8′ kämmt, ausgebildet. Durch geeignete Auslegung ist es somit möglich, bei Schließen der Flüssigkeits-Reibungskupplung 22 den Absatz 16 der Nockenwelle 3 gegen Wirkung des Kraftspeicherelementes 25 in Richtung der linken Schulter 15a der Aussparung 15 zu bewegen, wobei aufgrund des Zusammenwirkens mit der Umlenkrolle 8 bzw. deren Gegenzahnrad 8′ die aufgewandte Bremsarbeit dem Kettentrieb teilweise wieder zugeführt wird. Dies verhindert ein Auftreten von Zugkräften im Leertrum 4′ des Kettentriebes 4. Zusätzlich bzw. alternativ ist es bei einer derartigen Ausbildung jedoch auch möglich, zum nacheilenden Verstellen der Nockenwelle 3 durch Bremswirkung das Getriebeelement 18 mit einem starren Bauteil oder einem Energieverbraucher, so beispielsweise einer Wirbelstrombremse, einem Retarder oder einer ohnehin vorhandenen Lichtmaschine zu koppeln. Auch hierfür kann ein irgendwie geartetes Übersetzungsgetriebe vorgesehen sein.

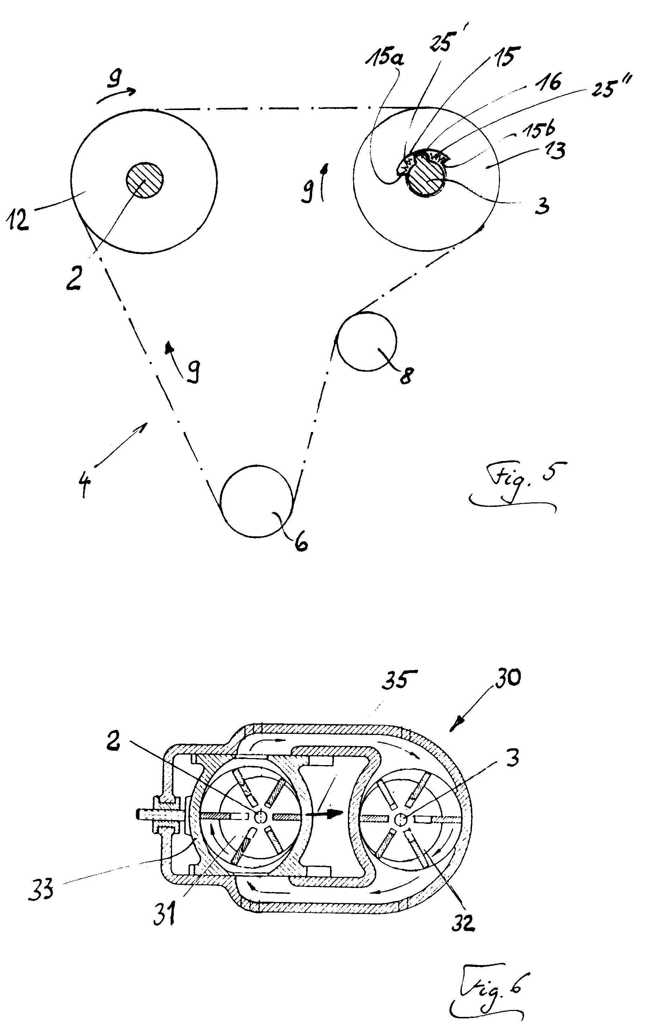

In einer Abwandlung ist aber auch eine Ausführung gemäß der abermals lediglich prinzipiell dargestellten Fig. 5 möglich. Hier ist sowohl zwischen der linken Schulter 15a und dem Absatz 16 als auch der rechten Schulter 15b und dem Absatz 16 der Nockenwelle 3 jeweils ein Kraftspeicherelement 25′, 25″ eingespannt. Auch hierbei ist wieder eine Kupplung, mit Hilfe derer ein an der Nockenwelle angebundenes Getriebeelement mit einem eine von der des Nockenwellen-Antriebsrades verschiedenartige Drehgeschwindigkeit aufweisenden Element verbindbar ist, vorgesehen. Bei geöffneter Kupplung befindet sich dabei die Nockenwelle 3 bzgl. ihres Antriebsrades 13 in der in Fig. 5 gezeigten mittleren Position. Wird die Kupplung hingegen geschlossen, so bewegt sich die Nockenwelle 3 mit ihrem Absatz 16 in Abhängigkeit von der tatsächlichen Drehgeschwindigkeit des eine verschiedenartige Drehgeschwindigkeit aufweisenden Elementes entweder gegen den Anschlag 15b oder den Anschlag 15a der Aussparung 15. Mit dieser Anordnung läßt sich sowohl eine voreilende als auch eine nacheilende Verstellung realisieren.

Insbesondere für eine derartige Anordnung eignet sich eine in Fig. 6 ausschnittsweise dargestellte, in ihrer Gesamtheit mit 30 bezeichnete Flügelzellenpumpe als Kupplung sowie als das eine verschiedenartige Drehgeschwindigkeit aufweisende Element. Vorteilhafterweise lassen sich beide Funktionen in einer derartigen Flügelzellenpumpe vereinigen. Dazu ist das erste Flügelzellenrad 31 der Flügelzellenpumpe 30 mit einer rotierenden Maschinenwelle, so beispielsweise der Nockenwelle 2 drehfest verbunden. Das zweite Flügelzellenrad 32 hingegen ist mit der zu verstellenden Nockenwelle 3 verbunden. Innerhalb des Gehäuses der Flügelzellenpumpe ist ein die beiden Flügelzellenräder voneinander trennender Wandabschnitt 33 bzgl. des ersten Flügelzellenrades 31 verschiebbar angeordnet.

Befindet sich der trennende Wandabschnitt 33 in der gezeigten Position, so fördert das erste Flügelzellenrad 31 das Hydraulikmedium der Flügelzellenpumpe gemäß den dargestellten Pfeilen nahezu vollständig zum Flügelzellenrad 32, wodurch die Nockenwelle 3 ein ebenfalls in Pfeilrichtung wirkendes Beschleunigungsmoment erfährt. Unter Bezug auf Fig. 5 wird die Nockenwelle 3 somit unter Entspannung des Kraftspeicherelementes 25′ sowie unter Komprimierung des Kraftspeicherelementes 25″ voreilend verstellt.

Mit Verschiebung des trennenden Wandabschnittes 33 in Pfeilrichtung 35 wird der vom Flügelzellenrad 31 zum Flügelzellenrad 32 geförderte Hydraulikstrom verringert. Gegen Ende dieser Verschiebebewegung wird dem Flügelzellenrad 32 und somit der Nockenwelle 3 ein im Gegenuhrzeigersinn wirkendes Bremsmoment aufgeprägt. Dies führt unter Bezugnahme auf Fig. 5 solange zu einer nacheilenden Verdrehung der Nockenwelle 3, bis ihr Anschlag 16 unter Komprimierung des Kraftspeicherelementes 25′ nahezu an der linken Schulter 15a der Aussparung 15 anliegt. Zwischen diesen beiden Extrempositionen existiert eine sog. mittlere Position des Wandabschnittes 33, in welcher die Nockenwelle kein zusätzliches beschleunigendes oder abbremsendes Moment erfährt und somit - bzgl. des Antriebsrades 13 gehalten durch die beiden Kraftspeicherelemente 25', 25'' - synchron zur Nockenwelle 2 umläuft. Wesentlich ist stets der allgemeine Erfindungsgedanke, wonach ein an der Nockenwelle angreifendes Getriebeelement über eine schaltbare Kupplung mit einem eine von der des Antriebsrades verschiedenartige Drehgeschwindigkeit aufweisenden Element verbindbar ist, um eine Nockenwelle gegenüber ihrem Antriebsrad verdrehen zu können.

**Patentansprüche**

1. Vorrichtung zur Winkelverstellung einer Brennkraftmaschinen-Nockenwelle (3) gegenüber einem drehbar auf der Welle (3) angeordneten Antriebsrad (13), wobei ein mit der Welle (3) verbundener, sich über ein Winkelsegment (β) erstreckender Mitnehmer (Absatz 16) in eine sich über ein demgegenüber größeres Winkelsegment (α) erstreckende Aussparung (15) im Antriebsrad (13) eingreift und somit einen maximalen Verstellbereich zwischen Antriebsrad und Welle vorgibt, und wobei eine schaltbare, schlupfermöglichende Kupplung (22) vorgesehen ist, um die Drehwinkellage zwischen der Welle (3) und dem Antriebsrad (13) zu verändern,
dadurch gekennzeichnet, daß die Kupplung (22) über ein Übersetzungsgetriebe (24 bzw. 8 und 18) eine Verbindung zwischen der Welle (3) und einer weiteren rotierenden Maschinenwelle (weitere Nockenwelle 2, Umlenkrolle 8) herstellt.

2. Vorrichtung nach Anspruch 1,
dadurch gekennzeichnet, daß ein die Welle (3) mit dem Antriebsrad (13) starr verbindendes Rastelement vorgesehen ist.

3. Vorrichtung nach Anspruch 1 oder 2,
dadurch gekennzeichnet, daß die Kupplung (22) als Flüssigkeits-Reibungskupplung oder als mechanische Reibungskupplung ausgebildet ist.

4. Vorrichtung nach einem der Ansprüche 1 bis 3,
dadurch gekennzeichnet, daß die weitere rotierende Maschinenwelle mit einem Energieverbraucher gekoppelt ist.

5. Vorrichtung nach einem der vorangegangenen Ansprüche,
dadurch gekennzeichnet, daß die Kupplung (22) und das Übersetzungsgetriebe (24) als Flügelzellenpumpe (30) ausgebildet sind, deren Flügelzellenräder (31, 32) drehfest mit der Welle (3) bzw. mit der weiteren Maschinenwelle (weitere Nockenwelle 2) verbunden sind und deren die beiden Flügelzellenräder (31, 32) voneinander trennender Wandabschnitt (33) bezüglich eines der beiden Flügelzellenräder verschiebbar ist.

6. Vorrichtung nach einem der vorangegangenen Ansprüche,
dadurch gekennzeichnet, daß das Wellen-Antriebsrad (13) auf einem Zapfen (14) der Welle (3) drehbar gelagert ist und im Lagerbereich die Aussparung (15) aufweist, in die der als Mitnehmer fungierende Absatz (16) eingreift, wobei zwischen dem Absatz (16) und der Aussparung (15) zumindest ein Kraftspeicherelement (25) eingespannt ist.

**Claims**

1. A device for adjusting the angular position of the camshaft (3) of an internal combustion engine relative to a drive pear (13) disposed for rotation on the shaft (3), a dog (shoulder 16) connected to the shaft (3) and extending over a sector (β) engaging in a recess (15) in the drive gear (13) extending over a larger sector (α) and thus setting a maximum range of adjustment of the drive gear relative to the shaft, and a shiftable slip clutch (22) is provided for varying the angular position of the shaft (3) relative to the drive gear (13),
characterised in that the clutch (22), via a transmission gear (24 or 8 and 18), makes a connection between the shaft (3) and a second rotating engine shaft (a second camshaft 2 and a guide pulley 8).

2. A device according to claim 1,
characterised in that a locking element rigidly connecting the shaft (3) to the drive gear (13) is provided.

3. A device according to claim 1 or 2,
characterised in that the clutch (22) is in the form of a liquid friction clutch or a mechanical friction clutch.

4. A device according to any one of claims 1 to 3,
characterised in that the second rotating engine shaft is coupled to a load.

5. A device according to any of the preceding claims,
characterised in that the clutch (22) and the transmission gear (24) are in the form of a vane cell pump (30) having impellers (31, 32) non-rotatably connected to the shaft (3) or the second shaft (the second camshaft 2), and the wall portion (33) which separates the two impellers (31, 32) from one another is movable relative to one of the two impellers.

6. A device according to any of the preceding claims,
characterised in that the shaft drive gear (13) is mounted for rotation on a journal (14) of the shaft (3) and, in the bearing region, has the recess (15) for engaging the dog in the form of the shoulder (16), at least one force accumulating element (25) being clamped between the shoulder (16) and the recess (15).


**Revendications**

1. Dispositif pour décaler angulairement un arbre à cames d'un moteur à combustion interne (3) par rapport à une roue d'entraînement (13) disposée sur l'arbre (3), dans lequel un entraîneur s'étendant sur un segment angulaire (β) et relié à l'arbre (3) (appendice 16) vient en pris dans un évidement (15) pratiqué dans la roue d'entraînement (13), évidement s'étendant sur un segment angulaire (α) par contre plus grand et de cette façon ménage une zone de décalage maximale entre la roue d'entraînement et l'arbre et dans lequel il est prévu un accouplement (22) débrayable, permettant le glissement, pour faire varier la position angulaire entre l'arbre (3) et la roue d'entraînement (13) dispositif
caractérisé en ce que le couplage (22) établit par l'intermédiaire d'une transmission de démultiplication (24 ou 8 et 18) une liaison entre l'arbre (3) et un autre arbre tournant du moteur à combustion interne (autre arbre à cames 2, poulie de renvoi 8).

2. Dispositif selon la revendication 1,
caractérisé en ce qu'il est prévu un élément de verrouillage reliant solidement l'arbre (3) à la roue d'entraînement (13).

3. Dispositif selon la revendication 1 ou 2,
caractérisé en ce que l'accouplement (22) est constitué comme un accouplement à friction liquide ou comme un accouplement à friction mécanique.

4. Dispositif selon l'une des revendications 1 à 3,
caractérisé en ce que l'autre arbre tournant du moteur est couplé avec un appareil consommateur d'énergie.

5. Dispositif selon l'une des revendications précédentes,
caractérisé en ce que l'accouplement (22) et la transmission de démultiplication (24) sont conçus comme une pompe à cellules semi-rotatives (30), dont les roues à cellules semi-rotatives (31, 32) sont reliées sans pouvoir tourner à l'arbre (3) ou à l'autre arbre du moteur (autre arbre à cames 2) et dont la section de paroi (33) séparant l'une de l'autre les deux roues à cellules semi-rotatives (31, 32) peut être déplacée par rapport à l'une des deux roues à cellules semi-rotatives.

6. Dispositif selon l'une des revendications précédentes,
caractérisé en ce que la roue de transmission d'arbres (13) est montée de façon à pouvoir tourner sur un téton (14) de l'arbre (3) et présente dans la zone de palier l'évidement (15), dans lequel vient en prise l'appendice (16) qui fait office d'entraîneur, au moins un élément (25) accumulateur d'énergie étant inséré entre l'appendice (16) et l'évidement (15).

Fig. 1

Fig. 2

Fig. 3

Fig. 4

Fig. 5

Fig. 6